# FASCICULE DE BREVET EUROPEEN

(11) **EP 3 076 070 B1**
(45) Date de publication et mention de la délivrance du brevet: **14.09.2022**
(21) Numéro de dépôt: 16162690.8
(22) Date de dépôt: 29.03.2016
(51) Int. Cl.: F21S 41/151, F21S 41/26, F21S 41/29, F21S 41/32, F21S 41/43, F21S 41/47, F21V 29/60, F21S 45/47, F21S 45/49, F21S 41/148, B60Q 1/12, F21Y 115/10

(54) **MODULE LUMINEUX POUR PROJECTEUR DE VEHICULE AUTOMOBILE**
LEUCHTMODUL FÜR KRAFTFAHRZEUGSCHEINWERFER
LIGHT MODULE FOR MOTOR VEHICLE HEADLIGHT

(30) Priorité: 30.03.2015 FR 1552665
(43) Date de publication de la demande: 05.10.2016
(73) Titulaire: VALEO VISION, 93012 Bobigny Cedex (FR)
(72) Inventeur: REDJEM SAAD, Lotfi, 75003 Paris (FR); STEFURA, Eric, 94100 Saint-Maur-des-Fossés (FR); JACQUEMIN, Paul, Seymour, IN 47274 (US); ELHACHIR, Brahim, 75019 Paris (FR)
(74) Mandataire: Valeo Visibility

(56) Documents cités:
- EP-A1- 1 681 510
- WO-A1-2012/013591
- JP-A- 2008 016 382
- US-B1- 6 210 024

## Description

L'invention a trait au domaine de l'éclairage et/ou de la signalisation, notamment pour véhicules automobiles. Plus particulièrement, l'invention a trait au refroidissement des modules lumineux réalisant ces fonctions d'éclairage et/ou de signalisation.

Un véhicule automobile est équipé de projecteurs, ou phares, destinés à illuminer la route devant le véhicule, la nuit ou en cas de luminosité réduite, par un faisceau lumineux global. Ces projecteurs comportent un ou plusieurs modules lumineux adaptés à générer et diriger un faisceau lumineux intermédiaire dont l'addition forme ledit faisceau lumineux global.

On connaît des modules lumineux formés par deux demi-coques assemblées sur un support plan et porteuses respectivement de moyens de déviation optique des rayons lumineux émis par une source de lumière associée à chaque demi-coque. Les rayons sont déviés vers un dispositif optique agencé en sortie du module lumineux. Selon la source de lumière qui est allumée, on réalise ainsi en sortie du module lumineux un faisceau apte à créer un feu de type route, éclairant plus fortement la scène de route mais risquant d'éblouir un conducteur venant à croiser le véhicule, ou un feu de type croisement, dans lequel le faisceau est concentré sur le devant du véhicule pour éviter ce type d'éblouissement.

Le document WO2012/013591 A1 donne un exemple de module lumineux connu.

On constate depuis quelques années que l'utilisation de diodes électroluminescentes comme sources de lumière se généralise dans les projecteurs implantés dans les véhicules automobiles. Or, il est connu que la performance optique d'un tel ensemble peut être fonction de la température de fonctionnement de la diode électroluminescente.

On peut constater par ailleurs que l'on utilise de plus en plus régulièrement des matériaux plastiques, et par exemple du plastique polycarbonate, pour la réalisation des demi-coques formant ces modules lumineux, et que ceci s'inscrit en outre dans un contexte de réduction d'encombrement des modules lumineux. La combinaison de ces caractéristiques de compacité, de matériaux et d'utilisation de diodes génératrices de chaleur est propice à un échauffement du dispositif non compatible avec la performance optique souhaitée. On constate notamment un confinement de l'air chaud entre le réflecteur de la demi-coque supérieure et le support plan de la source lumineuse associée.

L'invention a pour objectif de proposer un dispositif lumineux tel qu'il vient d'être décrit et dans lequel la température est maîtrisée pour ne pas impacter les performances de la diode.

Dans ce but, l'invention a pour objet un module lumineux tel que défini dans la revendication 1.

Le module lumineux comporte deux sous-modules rapportés l'un contre l'autre et dans chacun desquels une source de lumière est associée à un élément de déviation optique pour la déviation des rayons lumineux émis vers un dispositif optique de projection agencé en sortie du module. De préférence, les deux sources de lumière sont disposées sensiblement dans un même plan optique et respectivement associées à un élément de déviation optique apte à dévier selon un axe optique les rayons émis par ces sources vers un dispositif optique de projection agencé en sortie du module lumineux. Selon l'invention, le module lumineux comporte deux demi-coques assemblées l'une par rapport à l'autre en étant disposées de part et d'autre du plan optique, au moins l'une des deux demi-coques comportant au moins une ouverture formant des moyens de refroidissement par circulation d'air. Les demi-coques sont assemblées de manière à former un espace clos pour l'efficacité optique du module lumineux et la bonne transmission des rayons lumineux, et l'on prévoit des ouvertures dans cette espace clos pour réaliser une circulation d'air qui permet l'évacuation de l'air chaud stagnant habituellement dans le module lumineux.

Le module lumineux selon l'invention est agencé de sorte que la première demi-coque est disposée sous la deuxième demi-coque. De préférence, l'élément de déviation optique associé à la première demi-coque est agencé dans celle-ci pour la production d'un faisceau de rayons de type feux de route tandis que l'élément de déviation optique associé à la deuxième demi-coque est agencé dans celle-ci pour la production d'un faisceau de rayons de type feux de croisement.

Dans un mode de réalisation avantageux, les moyens de refroidissement portés par la première demi-coque prennent la forme d'au moins une lumière traversant l'épaisseur de la demi-coque pour permettre le passage d'air et l'élément de déviation optique correspondant à la première demi-coque est formée par la face interne réfléchissante cette première demi-coque, caractérisée en ce que la au moins une lumière est réalisée transversalement à l'axe optique le long de la lisière de cette face interne réfléchissante. Ainsi, les moyens de refroidissement sont situés au plus près de l'élément de déviation optique pour que l'air frais pénètre dans le dôme, entre l'élément de déviation optique et la plaque de support, et sans que cela gêne la réflexion des rayons.

On pourra prévoir que l'ouverture présente une largeur comprise entre 5 mm et 8 mm, et qu'elle présente une longueur au moins égale à 15mm. On vise ainsi à fournir une ouverture suffisante pour la circulation d'air, mais qui ne pénalise pas la tenue structurelle du module lumineux.

Selon différentes variantes de réalisation, on pourra prévoir que l'ouverture dans la première demi-coque est réalisée de façon continue par une lumière unique, ou bien que l'ouverture est discontinue, formée par une pluralité de lumières voisines côte à côte. Dans ce dernier cas, l'ouverture est avantageusement réalisée par deux lumières disposées en série transversale à la lisière de la face interne réfléchissante. Là encore, il est intéressant que les ouvertures formant les moyens de refroidissement soient situées au plus près de l'élément de déviation optique pour que l'air frais pénètre dans le dôme, entre l'élément de déviation optique et la plaque de support, et sans que cela gêne la réflexion des rayons.

Selon des caractéristiques propres à la réalisation de la deuxième demi-coque, on prévoit que les moyens de refroidissement portés par la deuxième demi-coque prennent la forme d'au moins une ouverture traversant l'épaisseur de la demi-coque pour permettre le passage d'air.

On pourra prévoir que les moyens de déviation optique sont formés par la face interne réfléchissante de la deuxième demi-coque, l'ouverture étant réalisée à la lisière de cette face interne réfléchissante, ou bien que la deuxième demi-coque forme un capot de protection pour un réflecteur réalisé distinctement de la deuxième demi-coque et formant l'élément de déviation optique, l'ouverture réalisée dans la demi-coque s'étendant sensiblement au-dessus du réflecteur.

Dans un mode de réalisation avantageux, les ouvertures formant les moyens de refroidissement comportent des nervures de rigidification disposées transversalement dans l'ouverture. Les nervures peuvent présenter une inclinaison par rapport au plan vertical et transversal, par exemple d'un angle de 45°, de manière à s'étendre vers l'arrière du module lumineux, à l'opposé du dispositif optique, depuis l'intérieur du module lumineux vers l'extérieur de celui-ci. On pourra prévoir que deux lumières s'étendent longitudinalement côte à côte pour former ladite ouverture, deux rangées de nervures distinctes étant respectivement disposées dans une lumière.

Selon différentes caractéristiques de l'invention, prises seules ou en combinaison :
- les sources de lumière sont des diodes électroluminescentes ;
- les moyens de refroidissement sont disposés symétriquement par rapport un plan vertical passant par l'axe optique ;
- le module lumineux est monté rotatif autour d'un axe, les moyens de refroidissement étant agencés autour de cet axe.

L'invention concerne également un projecteur de véhicule automobile dans lequel on prévoit au moins un module lumineux tel qu'il vient d'être décrit précédemment.

D'autres caractéristiques et avantages de la présente invention apparaitront plus clairement à l'aide de la description et des dessins parmi lesquels :
- la figure 1 est une représentation schématique d'un dispositif lumineux selon l'invention, dans une vue éclatée faisant apparaître différents éléments composant le dispositif, parmi lesquels une demi-coque inférieure, une plaque de support de diodes électroluminescentes et d'un radiateur, une demi-coque supérieure, et un dispositif optique de type lentille ;
- la figure 2 est une vue du dispositif assemblé, vu de trois quarts avant sur le dessus ;
- la figure 3 est une vue du dispositif assemblé, vu de trois quarts avant sur le dessous ;
- la figure 4 est une vue semblable à celle de la figure 2 dans laquelle la lentille a été retirée pour rendre visible à la fois les ouvertures formées dans la demi-coque inférieure et celles formées dans la demi-coque supérieure ;
- la figure 5 est une vue en coupe dans un plan vertical médian du dispositif, dans laquelle des flèches illustrent le trajet de l'air en circulation dans le module lumineux ;
- et la figure 6 est une vue de détail des ouvertures dans laquelle des flèches en traits ondulés illustrent l'air sortant du module lumineux et une flèche en trait droit illustre un rayon lumineux émis dans le module lumineux.

On va tout d'abord décrire le module lumineux selon l'invention, en s'appuyant notamment sur les figures, sur lesquelles il apparaît que le module lumineux 1 est formé de deux sous-modules 2, 4 rapportés l'un contre l'autre. Ils sont disposés l'un sous l'autre, de part et d'autre d'une plaque de support centrale 6. La plaque de support porte à une extrémité des ailettes de refroidissement par échange thermique formant un dissipateur thermique 8. Chaque sous-module comporte une demi-coque 10, 12 qui est fixée sur la plaque de support, une source de lumière 14, 16 qui est disposée sur la face de la plaque de support qui est tournée vers la demi-coque correspondante de manière à pouvoir émettre des rayons lumineux vers cette demi-coque. Chaque sous-module comporte en outre un élément de déviation optique 18, 20 et le module lumineux comporte un dispositif optique 22 de projection porté par les extrémités libres des demi-coques, l'ensemble étant agencé de sorte que pour chaque sous-module, les rayons émis par les sources de lumière sont réfléchis par l'élément de déviation optique associé en direction du dispositif optique 22 de projection. Ici le dispositif optique 22 de projection est une lentille de projection.

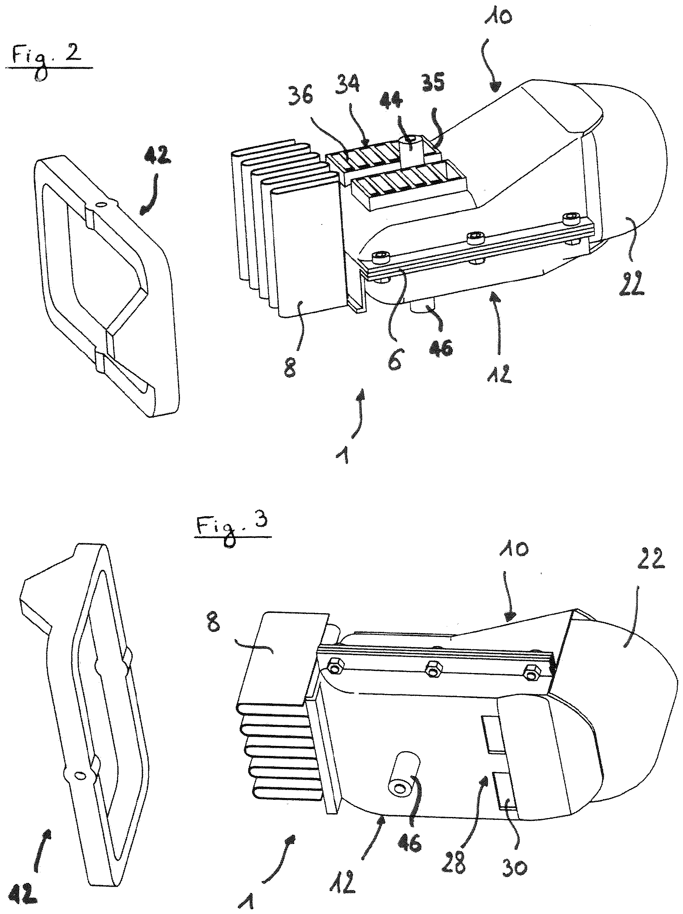

On va décrire dans la suite les demi-coques en fonction de l'orientation du module lumineux illustré notamment sur la figure 2, dans laquelle une deuxième demi-coque 10 est disposée au-dessus d'une première demi-coque 12, de sorte que l'on assimilera pour l'exemple qui va suivre les notions de première demi-coque et de demi-coque inférieure., ainsi que celles de deuxième demi-coque et de demi-coque supérieure

La première demi-coque 12 ou demi-coque inférieure est réalisée dans un matériau plastique de type polycarbonate, et elle comporte à sa périphérie un cadre de fixation 23 à la plaque de support et en son centre une paroi courbe présentant un profil sensiblement ellipsoïde. La première demi-coque 12 loge à l'intérieur du dôme ainsi formé entre la demi-coque et la plaque de support 6 une source de lumière formée par une diode électroluminescente 16 rapportée sous la plaque de support. On comprend que si, tel que cela est illustré, la première demi-coque présente un profil ellipsoïde double, on prévoira deux diodes pour que chaque ellipsoïde soit éclairé spécifiquement par l'une des diodes.

L'élément de déviation optique 18 est réalisé directement par une partie de la surface interne 24 de la première demi-coque 12. Un revêtement spécifique de la surface interne est réalisé dans un matériau réfléchissant, sur tout ou partie de la première demi-coque. Avantageusement, le revêtement est réalisé sur une partie de la première demi-coque, depuis son extrémité rapportée contre la plaque de support jusqu'à une zone centrale 26, sensiblement au droit de l'extrémité de la plaque de support.

La source de lumière et l'élément de déviation optique 18 sont agencés de sorte que les rayons émis par la source sont déviés par la surface réfléchissante en direction du dispositif optique22 de projection, de manière à former un faisceau d'éclairage de type feu de route.

La première demi-coque 12 comporte des premiers moyens de refroidissement, venant en complément de seconds moyens de refroidissement également portés par la deuxième demi-coque 10. Ces premiers moyens de refroidissement sont formés par une ouverture 28 réalisée dans la zone centrale de la première demi-coque 12, à la lisière de la surface réfléchissante.

Dans le mode de réalisation illustrée, l'ouverture est formée par deux lumières 30 disposées en série dans la direction transversale, c'est-à-dire perpendiculaire à l'axe optique. Chaque lumière traverse l'épaisseur de la première demi-coque 12 de sorte que de l'air peut pénétrer à l'intérieur du module lumineux depuis l'extérieur de celui-ci.

Chaque lumière présente une forme sensiblement rectangulaire avec une largeur qui s'étend longitudinalement entre 5 mm et 8 mm, et une longueur qui s'étend transversalement sur au minimum 15 mm, pour permettre l'entrée suffisante d'air sans pour autant pénaliser la tenue structurelle de l'ensemble.

Le mode de réalisation illustré, avec deux lumières distinctes disposées en série transversale pour former l'ouverture, est intéressant en ce qu'il permet une réalisation symétrique désaxée qui facilite l'injection centrale de matière lors de la réalisation de la première demi-coque 12. On comprendra que d'autres agencements, en nombre et/ou en forme, de lumières pour former cette ouverture pourront être prévus.

La deuxième demi-coque 10 ou demi-coque supérieure fait partie, avec la source de lumière 14 disposée sur la face supérieure de la plaque de support 6, d'un sous module 2 supérieur apte à générer en sortie un faisceau de type feux de croisement. Les rayons émis sont réfléchis par l'élément de déviation optique 20 en direction du dispositif optique 22 de projection, et un cache est disposé sur le trajet des rayons de sorte que, de façon connue par l'homme du métier, le faisceau soit coupé et que la lumière en sortie du projecteur forme des feux de croisement non éblouissant pour les autres usagers.

Dans le mode de réalisation décrit, l'élément de déviation optique 20 est réalisé indépendamment de la deuxième demi-coque 10. Celle-ci est réalisée dans un matériau plastique de type polycarbonate, et elle est fixée sur la plaque de support 6 de manière à venir en recouvrement de l'élément de déviation optique 20 formé par un réflecteur 32 lui aussi fixé sur la plaque de support 6.

Le réflecteur 32 présente une face interne dont le revêtement est apte à réfléchir la lumière émise par la source de lumière 14 en regard de laquelle il est disposé. Tel qu'illustré, le réflecteur 32 peut être double c'est-à-dire qu'il peut présenter une forme à plusieurs ellipses, et dans ce cas il est prévu une source de lumière 14 pour chaque forme elliptique du réflecteur.

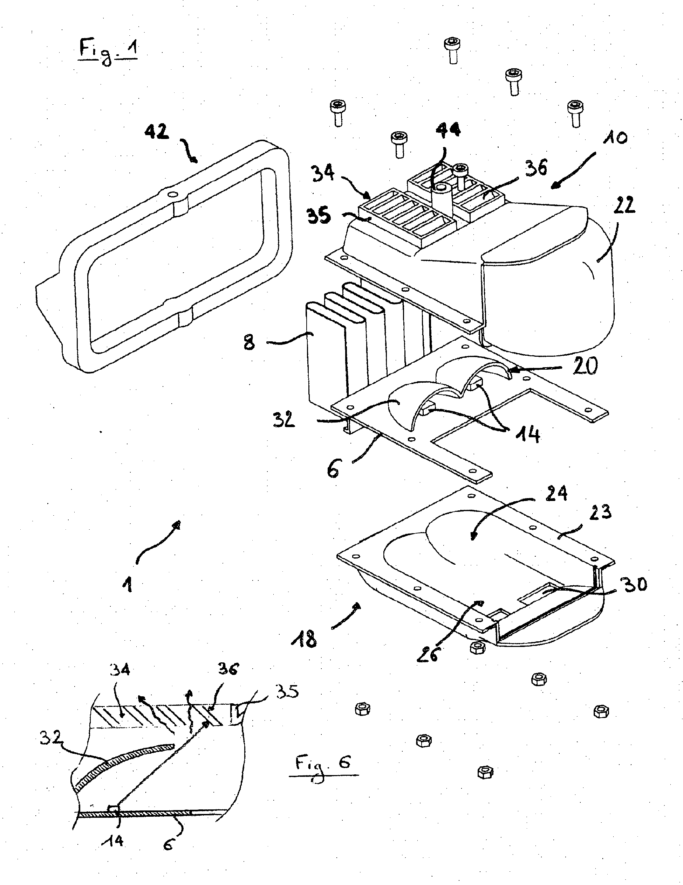

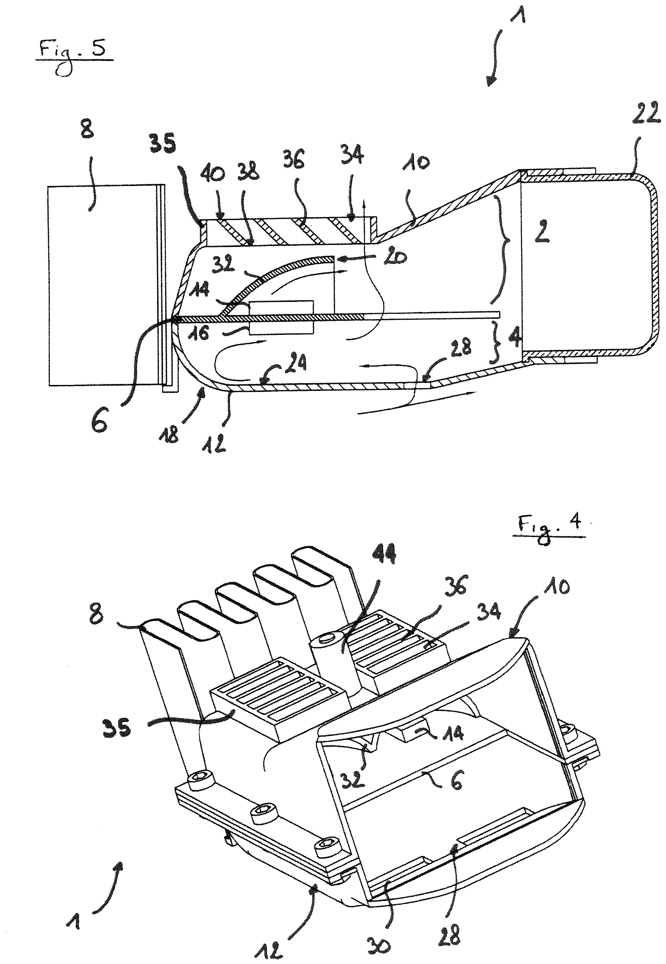

Les seconds moyens de refroidissement sont portés par la deuxième demi-coque 10. Ils consistent ici en deux ouvertures 34 disposées côte à côte et s'étendant longitudinalement. Chaque ouverture est délimitée par un bord périphérique 35 prolongeant en saillie verticale la paroi de la deuxième demi-coque et des nervures de rigidification 36 s'étendent transversalement d'un côté à l'autre de l'ouverture. Ces seconds moyens de refroidissement sont particulièrement illustrés sur les figures 5 et 6, sur lesquelles il est notable que les nervures présentent une inclinaison par rapport au plan transversal et vertical. On prévoit par exemple une inclinaison d'angle sensiblement égal à 45°, de sorte que les nervures s'étendent, depuis leur extrémité inférieure 38 tournée vers l'intérieur du module lumineux 1 jusqu'à leur extrémité supérieure 40 tournée vers l'extérieur du module lumineux 1, vers l'arrière du module lumineux 1. Par " vers l'arrière du module lumineux ", on entend dans le sens opposé à la direction d'émission des rayons en sortie du module lumineux 1. Il est illustré sur la figure 6 des avantages de cette inclinaison des nervures et de cette orientation. Les nervures présentent ainsi une surface sensiblement perpendiculaire à la direction d'émission des rayons lumineux qui ont été émis par la source de lumière 14 mais qui ont échappé au déflecteur, de sorte que les nervures bloquent la propagation de ces rayons lumineux et qu'elles permettent un bon rendement optique car il n'y a pas de fuite de rayons dans un contexte où des ouvertures sont faites pour le refroidissement par circulation d'air. Le nombre des nervures, ici quatre, l'inclinaison des nervures, ici 45°, et la hauteur des nervures sont notamment déterminés pour que l'extrémité inférieure 38 de chaque nervure soit dégagée longitudinalement par rapport à l'extrémité supérieure 40 de la nervure voisine, de sorte que l'évacuation d'air chaud puisse se produire verticalement sans obstacle.

Tel qu'illustré sur les figures, on peut prévoir que les premiers moyens de refroidissement assurant l'entrée d'air froid dans le module sont sous-dimensionnés par rapport aux deuxièmes moyens de refroidissement assurant la sortie d'air chaud. Il est intéressant de prévoir une ouverture dédiée à l'entrée d'air qui soit petite afin d'augmenter la vitesse d'entrée de l'air dans le module. Le rétrécissement de section sur l'écoulement d'air provoque de fait une augmentation de la vitesse de cet écoulement qui permet de balayer rapidement l'air dans la cavité chaude de la demi-coque inférieure du module. Et il est intéressant d'augmenter la dimension des seconds moyens de refroidissement afin d'évacuer un volume d'air chaud important, puisque par échauffement, l'air à l'intérieur du module subit une légère dilatation.

Le module lumineux 1 est, dans le mode de réalisation illustré, monté pivotant sensiblement horizontalement de manière notamment à ce que le faisceau projeté puisse suivre la courbe de la route dans les virages. On connaît cette fonctionnalité d'éclairage directionnel sous l'acronyme DBL pour " Dynamic Bending Light ". A cet effet, le module lumineux 1 est monté sur un support 42 correspondant, par l'intermédiaire d'un premier palier 44 solidaire de la deuxième demi-coque 10 et d'un deuxième palier 46 solidaire de la première demi-coque 12, et l'on prévoit un moteur d'entrainement en rotation (non représenté) pour générer le pivotement du module lumineux 1 autour de l'axe défini par l'alignement des paliers. On comprend que pour des véhicules ne proposant pas d'éclairage directionnel, le module lumineux 1 pourra être monté de façon fixe sur un boîtier du projecteur.

En variante non représentée, on pourra prévoir que la deuxième demi-coque 10 est réalisée sensiblement comme la première demi-coque 12, avec une pièce unique qui joue le rôle de coque et de surface réfléchissante par traitement de sa surface interne.

La description qui précède explique clairement comment l'invention permet d'atteindre les objectifs qu'elle s'est fixés et notamment de proposer un dispositif lumineux particulièrement compact apte à être logée dans un environnement confiné, sans que cela génère une surchauffe pénalisante pour l'efficacité photométrique du dispositif. Par la création de moyens de refroidissement selon l'invention, on crée un courant d'air convectif naturel entre un point bas froid et un point haut chaud incitant l'air confiné entre l'élément de déviation optique de la demi-coque supérieure et le radiateur à s'évacuer par l'ouverture haute.

Bien entendu, diverses modifications peuvent être apportées par l'homme du métier à la structure du module lumineux qui vient d'être décrite à titre d'exemple non limitatif, dès lors que l'on crée, dans un contexte de module lumineux fermé pour éviter la fuite de rayons lumineux, des moyens de refroidissement thermique par des ouvertures permettant une circulation d'air frais dans le module lumineux 1. Les modes de réalisation qui ont été décrits en détail ci-dessus ne sont pas limitatifs de l'invention. On a décrit un dispositif lumineux selon l'invention avec une demi-coque destinée à réaliser des feux de croisement qui est placée au-dessus de la demi-coque destinée à réaliser des feux de route, et on comprendra que l'utilisation de moyens de refroidissement par circulation d'air dans un module lumineux s'applique également à des modules lumineux dans lesquelles les demi-coques sont différemment agencées l'une par rapport à l'autre.

## Revendications

1. Module lumineux (1) comportant un premier et un deuxième sous-modules (4, 2) rapportés l'un contre l'autre, le premier sous-module (4) étant disposé sous le deuxième sous-module (2), chacun de part et d'autre d'une plaque de support centrale (6), et une lentille (22) de projection agencée en sortie du module, chaque sous-module (2,4) comportant une demi-coque (10, 12) qui est fixée sur la plaque de support, une source de lumière (14, 16) qui est disposée sur la face de la plaque de support qui est tournée vers la demi-coque correspondante de manière à pouvoir émettre des rayons lumineux vers cette demi-coque, et un élément de déviation optique (18, 20), **caractérisé en ce que** la lentille (22) est portée par les extrémités libres des demi-coques (10, 12), l'ensemble étant agencé de sorte que pour chaque sous-module (2, 4), les rayons émis par les sources de lumière (14, 16) sont réfléchis par l'élément de déviation optique (18, 20) associé en direction de la lentille, chaque demi-coque formant en combinaison avec l'autre demi-coque (10, 12), la plaque de support (6) et la lentille (22) un espace clos à l'exception d'au moins une ouverture (28) réalisée dans la demi-coque (12) du premier sous-module (4) et d'au moins une ouverture (34) réalisée dans la demi-coque (10) du deuxième sous-module (2), pour former respectivement des premier et deuxième moyens de refroidissement par circulation d'air assurant respectivement l'entrée d'air froid et la sortie d'air chaud dans le module.

2. Module lumineux (1) selon la revendication précédente, **caractérisé en ce que** l'élément de déviation optique (18) associé au premier sous-module (4) est agencé dans celui-ci pour la production d'un faisceau de rayons de type feux de route tandis que l'élément de déviation optique (20) associé au deuxième sous-module (2) est agencé dans celui-ci pour la production d'un faisceau de rayons de type feux de croisement.

3. Module lumineux (1) selon l'une des revendications 1 ou 2, **caractérisée en ce que** dans le premier sous-module (4), l'élément de déviation optique (18) est formé par la face interne réfléchissante (24) de la première demi-coque (12), l'ouverture (28) formant des premiers moyens de refroidissement portés par ladite première demi-coque (12) prenant la forme d'au moins une lumière (30) traversant l'épaisseur de la première demi-coque (12) pour permettre le passage d'air.

4. Module lumineux (1) selon la revendication 3, **caractérisé en ce que** la au moins une lumière (30) est réalisée transversalement le long de la lisière de cette face interne réfléchissante (24).

5. Module lumineux (1) selon l'une des revendications 3 ou 4, **caractérisé en ce que** l'ouverture (28) présente une largeur comprise entre 5 mm et 8 mm.

6. Module lumineux (1) selon l'une des revendications 3 à 5, **caractérisé en ce que** l'ouverture (28) présente une longueur au moins égale à 15mm.

7. Module lumineux (1) selon l'une des revendications 3 à 6, **caractérisé en ce que** l'ouverture (28) est réalisée de façon continue par une lumière unique.

8. Module lumineux (1) selon l'une des revendications 3 à 6, **caractérisé en ce que** l'ouverture (28) est discontinue, formée par une pluralité de lumières (30) voisines côte à côte.

9. Module lumineux (1) selon la revendication précédente, **caractérisé en ce que** l'ouverture (28) est réalisée par deux lumières (30) disposées en série transversale à la lisière de la face interne réfléchissante (24).

10. Module lumineux (1) selon l'une des revendications précédentes, **caractérisé en ce que** l'élément de déviation optique (20) est formé par une face interne réfléchissante de la demi-coque (10) du deuxième sous-module (2), et **en ce que** l'ouverture (34) est réalisée à la lisière de cette face interne réfléchissante.

11. Module lumineux (1) selon l'une des revendication 1 à 9, **caractérisé en ce que** la deuxième demi-coque (10) forme un capot de protection pour un réflecteur (32) réalisé distinctement de la deuxième demi-coque (10) et formant l'élément de déviation optique (20), l'ouverture (34) réalisée dans la deuxième demi-coque (10) s'étendant sensiblement au-dessus du réflecteur (32).

12. Module lumineux (1) selon la revendication précédente, **caractérisé en ce que** les seconds moyens de refroidissement comportent des nervures de rigidification (36) disposées transversalement dans l'ouverture (34).

13. Module lumineux (1) selon la revendication précédente, **caractérisé en ce que** les nervures (36) présentent une inclinaison par rapport au plan vertical et transversal de manière à s'étendre vers l'arrière du module lumineux (1), à l'opposé du dispositif optique (22) de projection, depuis l'intérieur du module lumineux (1) vers l'extérieur de celui-ci.

14. Module lumineux (1) selon l'une des revendications 12 ou 13, **caractérisé en ce que** deux lumières s'étendent longitudinalement côte à côte pour former ladite ouverture (34), deux rangées de nervures (36) distinctes étant respectivement disposées dans une lumière.

15. Projecteur de véhicule automobile avec au moins un module lumineux (1) selon l'une des revendications précédentes.

## Patentansprüche

1. Lichtmodul (1), das Folgendes umfasst: ein erstes und ein zweites Teilmodul (4, 2), die jeweils auf beiden Seiten einer mittigen Trägerplatte (6) aneinander liegen, wobei das erste Teilmodul (4) unter dem zweiten Teilmodul (2) angeordnet ist, und eine Projektionslinse (22), die am Ausgang des Moduls angeordnet ist, wobei jedes Teilmodul (2, 4) eine Halbschale (10, 12), die an der Trägerplatte befestigt ist, eine Lichtquelle (14, 16), die an der Fläche der Trägerplatte, die zu der entsprechenden Halbschale zeigt, angeordnet ist, um Lichtstrahlen zu dieser Halbschale emittieren zu können, und ein optisches Ablenkelement (18, 20) umfasst, **dadurch gekennzeichnet, dass** die Linse (22) von den freien Enden der Halbschalen (10, 12) getragen wird, wobei die Anordnung so eingerichtet ist, dass in jedem Teilmodul (2, 4) die von den Lichtquellen (14, 16) emittierten Strahlen von dem assoziierten optischen Ablenkelement (18, 20) in Richtung der Linse reflektiert werden, wobei jede Halbschale zusammen mit der anderen Halbschale (10, 12), der Trägerplatte (6) und der Linse (22) einen geschlossenen Raum bildet, mit Ausnahme mindestens einer Öffnung (28), die in der Halbschale (12) des ersten Teilmoduls (4) ausgeführt ist, und mindestens einer Öffnung (34), die in der Halbschale (10) des zweiten Teilmoduls (2) ausgeführt ist, um jeweils ein erstes und ein zweites Kühlmittel durch Luftzirkulation zu bilden, die in dem Modul den Eintritt von kühler Luft bzw. den Austritt von warmer Luft gestatten.

2. Lichtmodul (1) nach dem vorhergehenden Anspruch, **dadurch gekennzeichnet, dass** das optische Ablenkelement (18), das mit dem ersten Teilmodul (4) assoziiert ist, in diesem eingerichtet ist, um ein Strahlenbündel vom Typ Fernlicht zu erzeugen, während das optische Ablenkelement (20), das mit dem zweiten Teilmodul (2) assoziiert ist, in diesem eingerichtet ist, um ein Strahlenbündel vom Typ Abblendlicht zu erzeugen.

3. Lichtmodul (1) nach einem der Ansprüche 1 oder 2, **dadurch gekennzeichnet, dass** in dem ersten Teilmodul (4) das optische Ablenkelement (18) durch die reflektierende Innenfläche (24) der ersten Halbschale (12) gebildet wird, wobei die Öffnung (28), die von der ersten Halbschale (12) getragene erste Kühlmittel bildet, die Form mindestens eines Schlitzes (30) aufweist, der durch die Dicke der ersten Halbschale (12) hindurch verläuft, um den Durchgang von Luft zu ermöglichen.

4. Lichtmodul (1) nach Anspruch 3, **dadurch gekennzeichnet, dass** der mindestens eine Schlitz (30) in Querrichtung entlang der Kante dieser reflektierenden Innenfläche (24) ausgeführt ist.

5. Lichtmodul (1) nach einem der Ansprüche 3 oder 4, **dadurch gekennzeichnet, dass** die Öffnung (28) eine Breite zwischen 5 mm und 8 mm aufweist.

6. Lichtmodul (1) nach einem der Ansprüche 3 bis 5, **dadurch gekennzeichnet, dass** die Öffnung (28) eine Länge von mindestens 15 mm aufweist.

7. Lichtmodul (1) nach einem der Ansprüche 3 bis 6, **dadurch gekennzeichnet, dass** die Öffnung (28) kontinuierlich durch einen einzigen Schlitz ausgeführt ist.

8. Lichtmodul (1) nach einem der Ansprüche 3 bis 6, **dadurch gekennzeichnet, dass** die Öffnung (28) diskontinuierlich ist und durch eine Vielzahl von benachbarten, nebeneinander liegenden Schlitzen (30) gebildet wird.

9. Lichtmodul (1) nach dem vorhergehenden Anspruch, **dadurch gekennzeichnet, dass** die Öffnung (28) durch zwei Schlitze (30) ausgeführt ist, die in Reihe quer zu der Kante der reflektierenden Innenfläche (24) angeordnet sind.

10. Lichtmodul (1) nach einem der vorhergehenden Ansprüche, **dadurch gekennzeichnet, dass** das optische Ablenkelement (20) durch eine reflektierende Innenfläche der Halbschale (10) des zweiten Teilmoduls (2) gebildet wird und dass die Öffnung (34) an der Kante dieser reflektierenden Innenfläche ausgeführt ist.

11. Lichtmodul (1) nach einem der Ansprüche 1 bis 9, **dadurch gekennzeichnet, dass** die zweite Halbschale (10) eine Schutzhaube für einen Reflektor (32) bildet, der getrennt von der zweiten Halbschale (10) ausgeführt ist und das optische Ablenkelement (20) bildet, wobei sich die Öffnung (34), die in der zweiten Halbschale (10) ausgeführt ist, im Wesentlichen oberhalb des Reflektors (32) erstreckt.

12. Leuchtmodul (1) nach dem vorhergehenden Anspruch, **dadurch gekennzeichnet, dass** die zweiten Kühlmittel Versteifungsrippen (36) umfassen, die quer verlaufend in der Öffnung (34) angeordnet sind.

13. Lichtmodul (1) nach dem vorhergehenden Anspruch, **dadurch gekennzeichnet, dass** die Rippen (36) mit Bezug auf die Vertikal- und Querebene eine Neigung aufweisen, sodass sie sich von der optischen Projektionsvorrichtung (22) weg zur Hinterseite des Lichtmoduls (1) erstrecken, von der Innenseite des Lichtmoduls (1) zu dessen Außenseite.

14. Lichtmodul (1) nach einem der Ansprüche 12 oder 13, **dadurch gekennzeichnet, dass** sich zwei Schlitze in Längsrichtung nebeneinander erstrecken, um die Öffnung (34) zu bilden, wobei in einem Schlitz jeweils zwei getrennte Reihen von Rippen (36) angeordnet sind.

15. Kraftfahrzeugscheinwerfer mit mindestens einem Lichtmodul (1) nach einem der vorhergehenden Ansprüche.

## Claims

1. Light module (1) comprising a first and a second submodule (4, 2), which submodules are joined together, the first submodule (4) being positioned beneath the second submodule (2), one of them on each side of a central support plate (6), and a projection lens (22) arranged at the exit of the module, each submodule (2, 4) comprising a half shell (10, 12) which is fixed to the support plate, a light source (14, a16) which is positioned on that face of the support plate that faces toward the corresponding half shell so as to be able to emit rays of light towards this half shell, and an optical deviation element (18, 20), **characterized in that** the lens (22) is supported by the free ends of the half shells (10, 12), the assembly being arranged so that, for each submodule (2, 4), the rays emitted by the light sources (14, 16) are reflected by the associated optical deviation element (18, 20) towards the lens, each half shell, in combination with the other half shell (10, 12), the support plate (6) and the lens (22), forming a space that is closed with the exception of at least one opening (28) made in the half shell (12) of the first submodule (4) and of at least one opening (34) made in the half shell (10) of the second submodule (2) in order respectively to form first and second cooling means that work by circulating air, respectively admitting cold air into and expelling hot air from the module.

2. Light module (1) according to the preceding claim, **characterized in that** the optical deviation element (18) associated with the first submodule (4) is arranged therein for producing a beam of rays of the high beam type whereas the optical deviation element (20) associated with the second submodule (2) is arranged therein for producing a beam of rays of the low beam type.

3. Light module (1) according to either of Claims 1 and 2, **characterized in that**, in the first submodule (4), the optical deviation element (18) is formed by the reflective internal face (24) of the first half shell (12), the opening (28) forming first cooling means borne by said first half shell (12) taking the form of at least one slot (30) passing through the thickness of the first half shell (12) to allow the air to pass.

4. Light module (1) according to Claim 3, **characterized in that** the at least one slot (30) is made transversely along the edge of this reflective internal face (24).

5. Light module (1) according to either one of Claims 3 and 4, **characterized in that** the opening (28) has a width of between 5 mm and 8 mm

6. Light module (1) according to one of Claims 3 to 5, **characterized in that** the opening (28) has a length at least equal to 15 mm.

7. Light module (1) according to one of Claims 3 to 6, **characterized in that** the opening (28) is produced as continuous in the form of a single slot.

8. Light module (1) according to one of Claims 3 to 6, **characterized in that** the opening (28) is discontinuous, formed by a plurality of side-by-side adjacent slots (30) .

9. Light module (1) according to the preceding claim, **characterized in that** the opening (28) is produced in the form of two slots (30) disposed transversely in series at the edge of the reflective internal face (24).

10. Light module (1) according to one of the preceding claims, **characterized in that** the optical deviation element (20) is formed by a reflective internal face of the half shell (10) of the second submodule (2), and **in that** the opening (34) is produced at the edge of this reflective internal face.

11. Light module (1) according to one of Claims 1 to 9, **characterized in that** the second half shell (10) forms a protective cover for a reflector (32) produced distinctly from the second half shell (10) and forming the optical deviation element (20), the opening (34) produced in the second half shell (10) extending substantially above the reflector (32).

12. Light module (1) according to the preceding claim, **characterized in that** the second cooling means comprise stiffening ribs (36) disposed transversely in the opening (34) .

13. Light module (1) according to the preceding claim, **characterized in that** the ribs (36) are inclined with respect to the vertical and transverse plane so as to extend towards the rear of the optical module (1), in the opposite direction to the optical projection device (22), from the inside of the light module (1) towards the outside thereof.

14. Light module (1) according to either of Claims 12 and 13, **characterized in that** two slots extend longitudinally side-by-side to form said opening (34), two distinct rows of ribs (36) being respectively disposed in a slot.

15. Motor vehicle headlight with at least one light module (1) according to one of the preceding claims.
